# EUROPEAN PATENT APPLICATION

(11) **EP 1 067 738 A2**
(43) Date of publication of application: **10.01.2001**
(21) Application number: 00500147.4
(22) Date of filing: 06.07.2000
(51) Int. Cl.: H04L 12/56, H04Q 11/04

(54) **ATM processor for the inputs and outputs of a switch**

(30) Priority: 06.07.1999 ES 9901495
(71) Applicant: Telefonica, S.A., 28013 Madrid (ES)
(72) Inventor: Plaza Tron, Pierre Yves, 28020 Madrid (ES); Merayo Fernandes, Luis Antonio, 28020 Madrid (ES); Diaz Garcia, Juan Carlos, 28020 Madrid (ES)
(74) Representative: Carpintero Lopez, Francisco

(57) **Abstract**

The Asynchronous Transfer Mode (ATM) Processor serves as input and output interface to an ATM switch. The circuit has two operating modes, as converter of Cells to Microcells (CM mode) and as converter of Microcells to Cells (MC mode). The main function of the processor in CM operating mode is that of converting standard ATM cells (53 octets) to a parallel format of microcells (12 or 20 four-bit words, depending on the format programmed) which are processed by a switch, or else, in MC operating mode, the microcells are processed, at the switch output, in reverse manner. It also facilitates functions at ATM level like identifying the virtual path and circuit, performing statistical measurements on throughput to detect loss of information, control quality level of hardware level, insert and extract cells through the external microprocessor which controls the operation of the switch.

## Description

### OBJECT OF THE INVENTION

The present invention is related to an Asynchronous Transfer Mode (ATM) Processor input and output interface to a switch in an ATM switching matrix, the main function of which is that of converting standard ATM cells (53 octets) or extended format ATM cells(56 octets), into a parallel format of microcells, i.e., smaller packets of information than an ATM cell, with 12 or 20 four-bit words, depending on the programmed format, which are processed by the packet switch of an ATM switching matrix, when the processor is working in the Cell to Microcell conversion mode (CM operating mode) and converts the Microcells into Cells (MC operating mode) at the switch output. In addition, it provides other functions such as statistical data throughput measurements to detect loss of information, control of the hardware quality, insertion and extraction of cells through the external microprocessor which controls the operation of the switch, etc.

The present invention has its application within the telecommunications field and more specifically in the systems which employ switching matrices with asynchronous transfer mode which incorporate packet switches for 12 or 20 four-bit words.

### BACKGROUND TO THE INVENTION

In the current state of the art various solutions are known for performing the switching in Asynchronous Transfer Mode (ATM), all of which have standard formats of ATM cells.

The present invention converts the ATM cells into a determined intermediate format, termed microcells, which are subsequently processed independently for their switching, in another integrated circuit capable of working with microcells.

It consists fundamentally of three modules, one which converts the ATM cells it receives into microcells (4-bit words), another which converts the microcells into cells and a last interface module with the external microprocessor.

The cell to microcell converter also performs throughput statistical measurements in cells comparing a series of bits in the ATM header with a cell programmed through the microprocessor, and if they are the same the cell is accepted. It also identifies the circuit and the virtual path and inserts parity, cell number, synchronisation cell and extracts the routing label from the external memory to insert it into each microcell.

The microcell to cell converter also obtains synchronisation by means of a synchronising algorithm after receiving three correct microcell frames, detects frame errors by means of parity calculations, performs cell throughput statistical measurements in the same manner as the cell to microcell converter, replaces the microcell header with another for the ATM cell and generates cell synchronising and valid cell signals.

The microprocessor interface permits communication using the asynchronous protocol defined for the micro-processors in the 68xxx family of Motorola. It also holds the registers necessary for operation control and programming of the two preceding blocks (CM and MC converter).

### DESCRIPTION OF THE DRAWINGS

Other characteristics and benefits of the invention will become clear from the detailed description given below which examines a preferred embodiment of the invention, taken by way of illustration and not restrictively with reference to the drawings attached hereto, in which:
Figure 1.1 shows the block diagram of the module which serves to convert ATM cells to microcells.
Figure 1.2 shows the internal data structure which flows through the CM module.
Figure 2.1 shows the block diagram of the module which serves to convert microcells to cells.
Figure 2.2 shows the internal data structure which flows through the MC module.
Figure 3 shows the block diagram of the microprocessor interface.
Figure 4 shows the block diagram of the ATM series-to-parallel converter of the CM (Cell to Microcell) converter module.
Figure 5 shows the block diagram of the Labelling and ATM processor of the CM converter module.
Figure 6 shows the block diagram of the CM converter output module.
In figure 7 is shown the input block of the MC (microcell to cell) converter module.
In figure 8 is shown the labelling and ATM processing block of the MC converter module.
In figure 9 is shown the output block of the MC converter module.

### DESCRIPTION OF THE PREFERRED EMBODIMENT

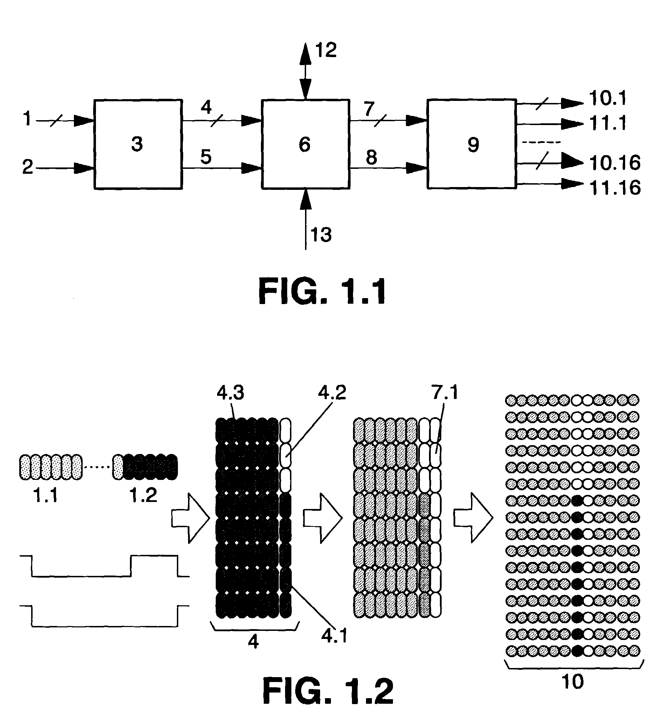

In making the detailed description of the preferred embodiment of the invention, constant reference shall be made to the Figures of the drawings, in Figure 1.1 of which can be seen the block diagram of the module which serves to convert ATM Cells to Microcells. All its signals are differential whereby physically they are two signals instead of one. It is possible that not all signals are mentioned in this description.

The ATM series-to-parallel converter block (3) converts the stream of 53 bytes per standard cell or 56 bytes per extended cell, which is applied over an 8-bit parallel input bus (1) to a stream of 64 bytes per cell which leaves over the 64-bit parallel output bus (4). This operation permits the process clock frequency to be reduced from 311 MHz (2) to 51 MHz (5) permitting the use of CMOS technology.

The labelling and ATM processor block (6) performs throughput statistical measurements in ATM cells. It also carries out circuit and virtual path identification, generating a 16-bit address (12) for the table implemented in the external memory. It also inserts a field of extra information termed labelling information, which includes the order number, parity of the labelling field and label of cell reserved for the microprocessor, of 64 bits, the purpose of which is to detect problems in the switch such as loss or impairment of the information. Likewise it inserts control cells originating in the microprocessor via connection (13), which are incorporated into the main stream at the appropriate time.

Finally the output block (9) divides the cells, which arrive over bus (7), of 64 bits times 64 bytes, at 51 MHz (8), into microcells (10) of 4 bits times 12 or 20 four-bit words. This implies that at the output of the processor operating in Cell to Microcell conversion mode (CM mode) there are 16 four-bit buses (10.1-10.16) over which leave the aforementioned microcells. There are two microcell formats possible, 12 or 20 four-bit words, whereby the parallel processing level in the switch is programmable, and hence the data flow, or throughput. With the format of 20 four-bit words, microcells are only produced through 8 outputs (32 bits in parallel); with the format of 12 four-bit words, microcells are produced through the 16 outputs of the processor in CM mode. Each bus (10.1-10.16) has associated with it its own clock (11.1-11.16) at 68 MHz (plesiochronous system). To each microcell is added the routing label which is obtained from the external memory. Finally, to obtain a frame structure at the outputs, a synchronisation microcell is inserted into each microcell stream every 1920 bits.

In Figure 1.2 can be seen the format of the data processed internally by the CM module, already described. Where the data stream is 53 bytes per standard cell or 56 bytes per extended cell, both the information field (1.1) and the 5 header bytes (1.2), enter into the series-to-parallel converter block (3) over the 8-bit parallel bus (1). And a stream of 64 bytes per cell is obtained over a 64-bit parallel bus (4). Said stream contains the information field (4.3) of the cell, 5 header bytes (4.1) and 3 justification bytes (4.2) without information, in the event that the data throughput of the bus (1) is 53 bytes per cell. All this information is applied to the labelling and ATM processor block (6), and at its output, over bus (7), the information stream is obtained which is similar to that which came into said block but with an extra information field termed labelling information (7.1), which includes the order number, labelling field parity and label of cell reserved for the microprocessor, of 64 bits, the purpose of which is to detect problems in the switch such as loss or impairment of the information. After passing through the output block (9) of the CM module, the cells are obtained of 64 bits by 64 bytes, which arrive over the bus (7), converted into microcells (10) of 4 bits by 12 or 20 four-bit words delivered by 16 four-bit buses (10.1-10.16). That is, in a microcell format.

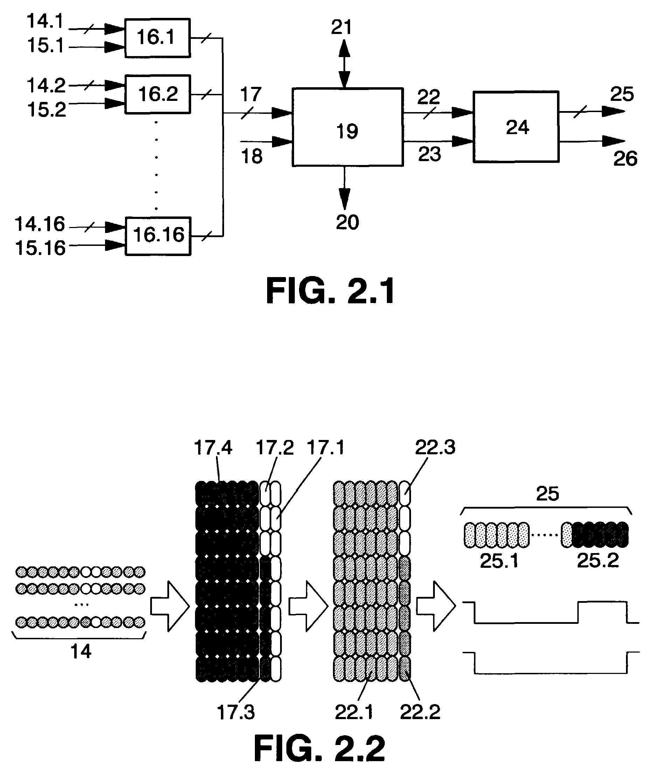

In Figure 2.1 the block diagram is shown of the module which serves to convert Microcells into Cells, being practically an inverted implementation of the Cell to Microcell converter block: it carries out precisely the reverse function, i.e., from 16 or 8 (depending on the microcell format) microcell buses, standard ATM cells of 53 bytes, or of 56 bytes with extended format, of 8 bits in parallel, are extracted.

Each input module (16.1-16.16) detects at its input via the buses (14.1-14.16) the corresponding microcell frame, at 68 MHz (15.1-15.16), and attains synchronism after receiving three correct frames, therefore allowing the information to pass on to the following blocks. Frame errors are detected by means of parity calculations. After data synchronisation a stream of cells is obtained over bus (17) of 64 bits in parallel, each microcell stream being synchronised through a FIFO memory via the input of which the data are read, with a single clock (18) at 68 MHz. These cells also contain the data field mentioned above, termed labelling information.

The labelling and ATM processor block (19) checks that the labelling field parity and the order number are correct. It carries out the operations regarding virtual circuit identification, producing an address (21) which is employed to select an ATM header in the external memory which replaces that currently held in the cell processed by the circuit operating in MC (Microcell to Cell) conversion mode. Moreover, if the cell that is being processed is marked as reserved (in the labelling field), then it is extracted via connection (20) into the microprocessor through a FIFO memory. If it is not extracted it exits via a 64-bit data bus (22) with its clock (23) at 68 MHz.

The emitter-coupled logic (ECL) output block (24) is essentially a parallel-to-series converter from 64 bits to 8 bits. It also produces the valid cell and cell synchronising signals.

Figure 2.2 shows the format of the data processed internally by the MC module, already described. Moreover the process is similar to that of Figure 1.2 but in reverse. That is, the microcells (14) that are applied to the MC module over 8 or 16 buses, with identical structure to those at the CM module output, are converted into a 64-byte cell stream, which includes the information field (17.4), labelling (17.1), header (17.3) and justification, or stuffing, bytes (17.2). This stream is delivered to the labelling and ATM processor block (19) over a 64-bit parallel bus (17), and after selecting an ATM header to replace that present, the output block (24) receives over bus (22), the information field (22.1), header (22.2) and justification bytes (22.3), similar to that of bus (17) but without labelling information. The output block of the MC module facilitates a data stream of 53 bytes, or 56 bytes, including both the information field (25.1) and the header (25.2) over an 8-bit bus parallel (25). That is, a cell format.

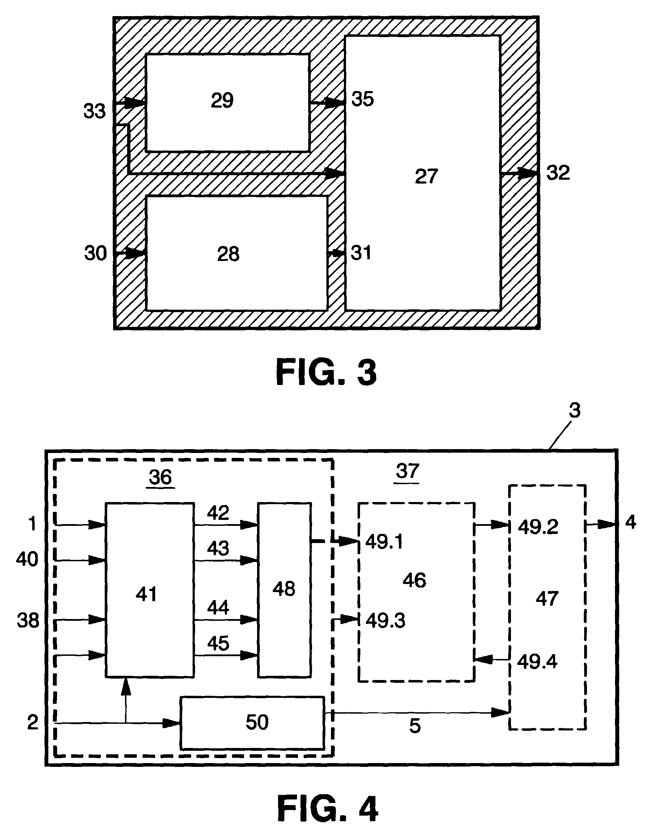

In Figure 3 can be seen the block diagram of the microprocessor interface, which is capable of communicating with the asynchronous protocol defined for microprocessors of the 68xxx family of Motorola. It holds the registers necessary for operational control and programming of the modules which convert cells to microcells and vice versa. This interface is shared between the two modules, there even being physical sharing of the aforementioned registers.

The interface of the microprocessor has the following objectives: The synchronous interface block (27) is responsible for maintaining the configuration and state registers of the integrated circuit, the asynchronous interface block (28) is capable of communicating with an interface of a processor of the 68000 family of Motorola, and the multiplexer block (29) is responsible for operations with the CM block when the circuit is programmed in CM mode or with the MC block when the circuit is programmed in MC mode.

The asynchronous interface block (28) is that which produces all the control signals for the other two blocks of the microprocessor interface. These signals (31) are those required for writing data into the registers held in synchronous block (27) (read or write enabler, data buses and correctly timed addresses and clock). The multiplexer block (29) indicates to it what clock it has to work with: with that for CM or MC depending on the mode programmed in the circuit. The inputs (30) are the standard inputs of a Motorola bus. In addition, the clock signals also enter and the block has to choose with which clock to work depending on the mode in which the circuit is programmed (CM or MC).

The synchronous interface block (27) basically holds the programmable and read-only registers associated with circuit operation plus the logic necessary for selecting the input and output data via the bus (33) to be read by the appropriate register or else to extract the programmed values correctly. The outputs (32) from this block are led to all the inputs of the configuration sub-blocks.

The multiplexer block (29) incorporates multiplexers for channelling all the inputs (33) of the CM or of the MC block towards the remaining blocks of the microprocessor interface, through the connections (34) and (35), depending on the programmed mode. This last item is illustrated in an input signal to the block.

Figure 4 shows the block diagram of the ATM series-to-parallel converter (3) of the CM (Cells to Microcells) converter module. Technologically, this block is divided into two: one block (36) in emitter-coupled logic (ECL), and the other block (37) in CMOS technology.

The ECL block (36) receives the ATM data (1) at 311 MHz (2) together with its control signals: Valid cell signal (38), and cell synchronising signal (40). It carries out a cell integrity check, i.e., it verifies whether the cell has the predetermined length: 53 or 56 bytes. The cell integrity controller block (41) has precisely the same types of signal at its inputs and outputs (42-45), except that at its output a correct data stream is assured (length and relationship of control/data signals).

For the conversion from series to parallel and of cell size to 64 bytes, use is made of a FIFO memory (46) in CMOS technology and the read (47) and write (48) control blocks. From the read control block, over the 64-bit bus (49.1), the cells are stored in the FIFO memory (46) when the write enable connection (49.3) is high. In a similar manner, when the read enable signal (49.4) is high, the data stored in the memory (46) are transferred over the 64-bit bus (49.2) to the read control block. Due to the conversion the speed of the input clock (2) is reduced to 51 MHz (5) by means of a divide-by-six block (50).

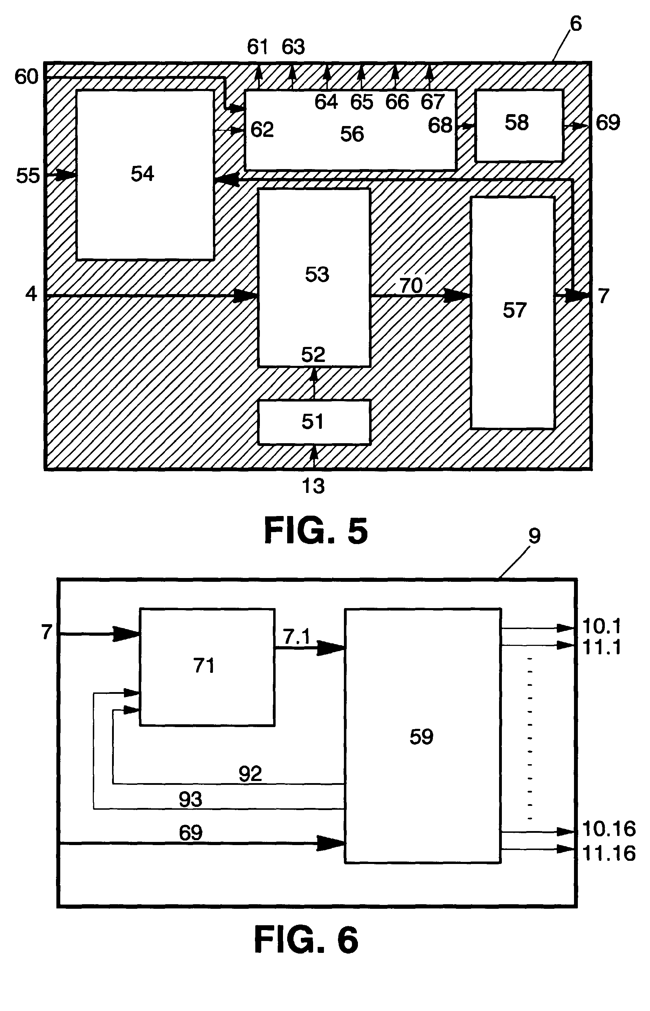

Figure 5 shows the block diagram of the labelling and ATM processor (6) of the CM converter module the functions of which are those described below:

To effect the insertion of a cell through the interface with the external microprocessor, the latter writes the bytes in a register from which the information (13) is taken and is progressively written into an asynchronous FIFO memory (51). When the microprocessor has finished a cell available signal (52) is sent to the cell inserter block (53), which inserts said cell into the information stream (4) when there is a space available and it is sent to the memory (57) via connection (70).

In extracting the external memory address in order to search for a routing label in the external memory, a bus (55) reaches the address extractor block (54) carrying the values of the bit-pair selectors, termed BPS0 to BPS7 and each one comprises 4 bits. These inputs come from the microprocessor interface and their function is to select from the ATM cell header that is being processed in the circuit the bits necessary to constitute the address required to extract from an external memory the routing label corresponding to the ATM cell.

In the ATM processor (56) is included the 32-bit statistical counter and the external memory handler (read and write). Consequently the routing label is extracted. It also performs the reserved cell identification, flagging a bit in the labelling field. The function of the ATM processor is to obtain the routing label and insert it in each of the microcells. Its signals are: the data (60) of the memory in which are stored the routing labels, the address output (61) that selects in the external memory the ATM header it is wished to process, the address input (62) produced by the cell address extractor block (54) from the bit-pair selectors (BPS), which arrive over the bus (55), the output (63) of the cell statistical counter and the signals directed towards the external memory for its control: output enabler (64), write control (65), chip enabler (66) and the data bus (67). As well as the data output (68) which holds the routing label read from the external memory.

The FIFO data memory (57) is employed as synchroniser given that the frequency that is handled at the output of the CM module is 68 MHz. A similar situation arises with the routing label FIFO memory (58) since only one is required for each cell. In the FIFOs interleaving is performed since the maximum frequency the FIFOs can handle is: 40 MHz. At the output of the memories are obtained the data (7) coming from the cell inserter (53) and the routing label (69). Figure 6 shows the block diagram of the output module (9) of the CM converter, which serves to create in the generator (59) microcell streams (10.1-10.16) in the outputs: 8 outputs for the format of 20 four-bit words and 16 outputs for the format of 12 four-bit words. It inserts in each of the streams the routing label (69) and the synchronisation microcell in order to form frames every 1920 bits.

In the label processing block (71) the order number and the parity are calculated, these being inserted into the cell stream, which enters via the bus (7), in the correct position. By means of the synchronising signals (92) and (93) the block (71) is indicated the moment at which it has to perform the label processing.

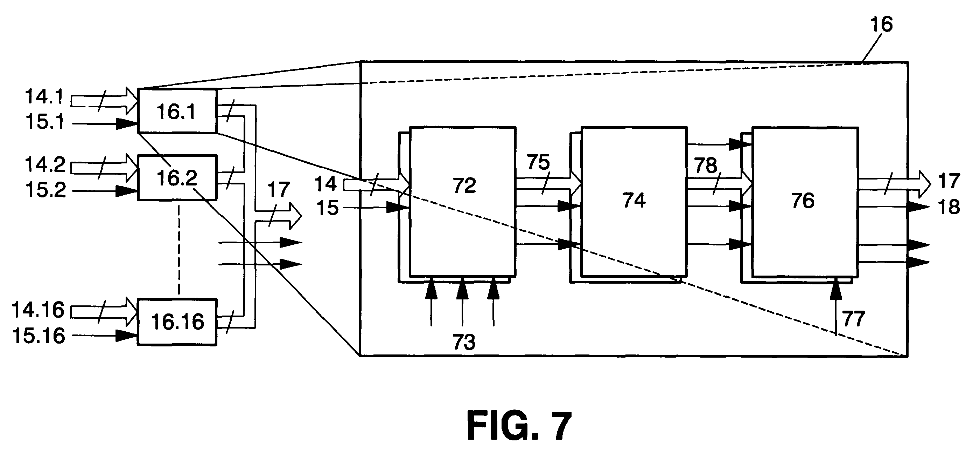

Figure 7 shows the input block of the MC (Microcell to Cell) converter module which contains 16 identical sub-blocks (16.1-16.16). Each one of these manages its own input clock (15). Depending on the microcell format which is programmed, 8 or 16 sub-blocks shall be active, i.e., for the format of 20 four-bit words only 8 sub-blocks are employed, whilst for that of 12 four-bit words the 16 are used: stream and parallel bit control.

The states machine (72) is in charge of the synchronising algorithm whereby errors are detected in the data transmission (14) by means of checking a synchronisation word (73) (parity and key word). Both microcell formats are recognised.

The parity checker (74) calculates the parity bit by bit (sum and modulo 4) of the frame that is being transmitted at each moment, comparing the result when the frame ends with the value included in the synchronisation microcell transmitted in the data over the bus (75). If there should be an error the data are considered non-valid.

The memory (76) offsets the possible differences in the frequency of the input clocks (15). The data, which arrive over the bus (78), from the 16/8 input memories are read simultaneously with a single clock (77). Consequently it could be said that said memories behave like one only which would comprise 16/8 inputs for a single 64-bit output. Shifts in clock frequency which can reach up to 2 cycles are tolerated.

The output data of the input block (16) comprise a single 64-bit data bus (17) with its own clock (18) over which flow ATM cells with the labelling information.

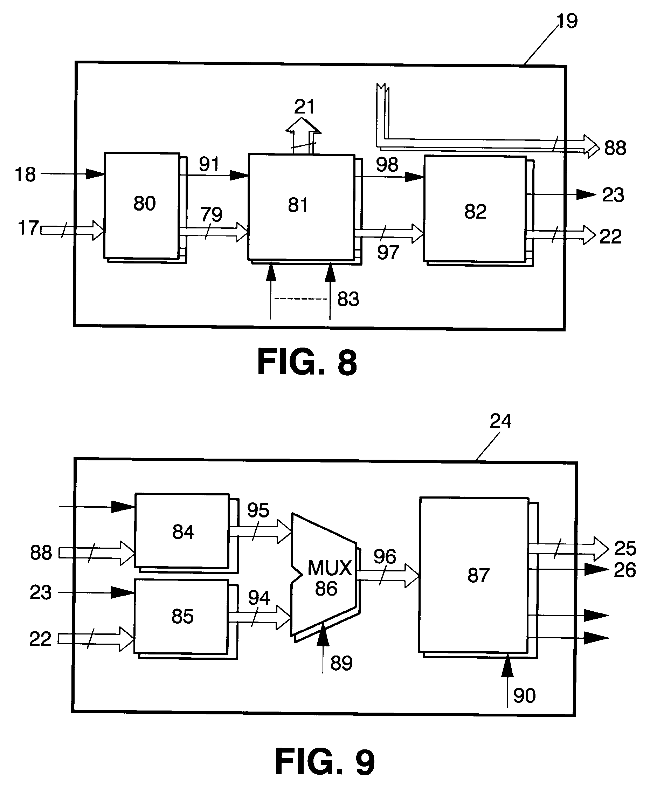

In Figure 8, can be seen the labelling and ATM processing block (19) of the MC converter module; in the label processing block (80), the inputs of which are the data over the bus (17) and their corresponding clock (18), the parity of the labelling is checked and if an error is found the cell is discarded. At the output of this block the data and their clock are routed, over the bus (79) and the connection (91) respectively, to the block that identifies the ATM header.

In ATM header identifier block (81) a process is carried out which is equivalent to that which is done in the CM. The only difference with the CM process lies in that the 16-bit address which is generated from said identification by the bit-pair selectors (83) is employed to access via the bus (21) a pair of external memories in which ATM headers are stored. By programming the circuit shall use these headers (88) to modify or replace the headers of the transmitted cells. The data, via the bus (97), and their clock (98) are routed to the following block (82).

In the cell extractor block (82) those cells whose flag in the extraction label field is high, are removed from the data throughput and stored in FIFO memory. These cells can be extracted by the microprocessor byte by byte.

Figure 9 presents the output block (24) of the MC converter module, which carries out a parallel-to-series conversion of the parallel 64-bit stream, via the bus (22), with a clock (23) of 68 MHz to a parallel 8-bit stream, via the bus (25), at the output with a clock (26) at 311 MHz (same format as at the input of the CM converter module). It is divided into 4 blocks: A pair of FIFO memories (85) and (84) for the data, via the bus (22), and header, via the bus (88), whose outputs (94) and (95) are routed to a multiplexer (86), which provides a single output (96) to a parallel-to-series converter (87) fabricated in ECL (emitter-coupled logic) technology with one input (90) with the 311 MHz output clock. The header selection connection (89) indicates if the new header is to be inserted or if that already there is to be left.

It is not considered necessary to extend the content of this description further for an expert in the subject to understand its scope and the benefits arising from the invention, as well as to develop and put into practice the object thereof.

However, it is to be understood that the invention has been described according to a preferred embodiment thereof, whereby it is capable of modifications without this implying any alteration whatever in the operation of said invention, such modifications being capable, in particular, of affecting the form, the size and/or the materials of fabrication.

## Claims

1. Asynchronous Transfer Mode (ATM) Processor input and output interface to an ATM switch which converts cells into microcells and vice versa, which is characterised in that in its basic structure it Coin-prises two converter blocks, one of ATM Cells to Microcells (CM) and another of Microcells to Cells (MC), and of an interface with the microprocessor, in which said converter block (CM) consists of an ATM series-to-parallel converter (3), a labelling and ATM processor (6) and an output block (9); in which said converter block (MC) comprises 1 input block (16), a labelling and ATM processor (19) and an output block (24), and in which the mentioned interface with the microprocessor is capable of communicating with the asynchronous protocol defined for microprocessors of the 68xxx family of Motorola, and consists of an asynchronous interface block (28), a synchronous interface block (27) and a multiplexer (29).

2. Asynchronous transfer mode (ATM) processor input and output to an ATM switch, in accordance with claim 1, which is characterised in that the series-to-parallel ATM converter (3) receives the data with cell format of 53 or 56 bytes at 311 MHz, checks the integrity of each cell and by means of a FIFO memory and read and write control blocks converts them into a 64-byte stream at 51 MHz.

3. Asynchronous transfer mode (ATM) processor input and output to an ATM switch, in accordance with claim 1, which is characterised in that the labelling and ATM processor (6) inserts cells through the interface with the external microprocessor into the information stream, extracts the routing label and incorporates a new label field, stored in an external memory, and by means of FIFO memories synchronises the data stream frequencies with that of the output block.

4. Asynchronous transfer mode (ATM) processor input and output to an ATM switch, in accordance with claim 1, which is characterised in that the output block (9) processes the label field in order to calculate the order number and parity which are inserted into the cell throughput in the correct position and produces microcell streams at the outputs, inserting into each of them the routing label and the synchronising microcell in order to constitute frames every 1920 bits.

5. Asynchronous transfer mode (ATM) processor input and output to an ATM switch, in accordance with claim 1, which is characterised in that the input block consists of 16 identical sub-blocks (16.1-16.16), each one of which serves to detect errors in the data transmission by checking a synchronisation word, by checking the parity to discover if the data are valid, by offsetting possible differences in the frequency of the clocks of the input data and of constituting at the output a 64-bit data bus over which ATM cells flow with the labelling information.

6. Asynchronous transfer mode (ATM) processor input and output to an ATM switch, in accordance with claim 1, which is characterised in that the labelling and ATM processor (19) serves to check the parity of the labelling and if the cell is in error it is discarded, moreover it extracts from the data stream those cells whose labelling field extraction flag is high and stores them in a FIFO memory for their subsequent extraction by the microprocessor, and extracts the label from the received parallel ATM cells.

7. Asynchronous transfer mode (ATM) processor input and output to an ATM switch, in accordance with claim 1, which is characterised in that the output block (24) performs the parallel-to-series conversion of 64 bits in parallel at the input to 8 bits in parallel at the output by means of two memories, one for the data and another for the header, a multiplexer, and a parallel-to-series converter in ECL (emitter-coupled logic) technology.

8. Asynchronous transfer mode (ATM) processor input and output to an ATM switch, in accordance with claim 1, which is characterised in that the asynchronous interface block (28) produces all the control signals of the synchronous interface block (27) and of the multiplexer (29), which contain, respectively, the programmable and read-only registers associated with the operation of the processor and the multiplexers for routing all the inputs of the CM or MC converter, in accordance with the programmed mode, towards the remaining blocks of the microprocessor interface.
